# EUROPÄISCHE PATENTANMELDUNG

(11) **EP 1 457 755 A1**
(43) Veröffentlichungstag der Anmeldung: **15.09.2004**
(21) Anmeldenummer: 04002741.9
(22) Anmeldetag: 07.02.2004
(51) Int. Cl.: F41C 27/06, F41F 7/00

(54) **Hunde-Trainingsgerät**

(30) Priorität: 12.03.2003 DE 20304023 U
(71) Anmelder: Röhm GmbH, 89567 Sontheim (DE)
(72) Erfinder: Die Erfindernennung liegt noch nicht vor
(74) Vertreter: Hentrich, Swen Dipl.-Phys. Dr.

(57) **Zusammenfassung**

Die Erfindung betrifft ein Hunde-Trainingsgerät mit einem unlösbar mit einer
Abschußvorrichtung (2) verbundenen Lauf (6), auf den ein mit einem Sackloch (12) versehener Dummy (3) aufsteckbar ist, wobei an dem
freien Ende des Laufes (6) an dessen Mündung (8) ein mit dieser verbundener Querschlitz (9) ausgebildet ist.

## Beschreibung

Die Erfindung betrifft ein Hunde-Trainingsgerät mit einem unlösbar mit einer Abschußvorrichtung verbundenen Lauf, auf den ein mit einem Sackloch versehener Dummy aufsteckbar ist.

Um Hunde bei der Jagd als Unterstüztung und Helfer für den Jäger sinnvoll einsetzen zu können, müssen diese Hunde gut ausgebildet werden zur Erfüllung ihrer Aufgabe bei der Verlorensuche, Suchen der Ente im Schilf und auch beim Abgeben des Schusses selber ein ruhiges Verhalten zu zeigen, selbst wenn der Hund das abstreichende, beschossene und dann fallende Wild sieht. Um diese Ziele bei der Ausbildung zu erreichen, behilft man sich bisher beim Hundetraining damit, dass der Trainer mit dem neben ihm platzierten Hund manuell einen Gegenstand wegwirft oder schleudert und dazu möglichst simultan ein lautes Geräusch erzeugt. Die Synchronizität des Ereignisses ist dabei nicht leicht einzuhalten, auch ist die Reichweite begrenzt, die auf diese Weise erzielt werden kann.

Der Erfindung liegt daher die Aufgabe zugrunde, ein Hunde-Trainingsgerät der eingangs genannten Art bereit zu stellen, mit dem die reale Situation bei der Schußabgabe leichter simuliert werden kann und eine große Reichweite des Dummys erzielbar ist. Aufgabe ist weiterhin, das Hunde-Trainingsgerät so auszubilden, dass eine Gefährdung des Trainers, des Hundes oder Dritter wirksam vermieden ist.

Diese Aufgabe wird bei einem Hunde-Trainingsgerät der eingags genannten Art dadurch gelöst, dass an dem freien Ende des Laufes an dessen Mündung ein mit dieser verbundener Querschlitz ausgebildet ist.

Mit dieser Gestaltung ist der Vorteil verbunden, dass die Synchronizität der Knallerzeugung und des Entfernen des Dummys vom Standort zwangsläufig ist unter Gewährleistung der Gewißheit, dass die Abschussvorrichtung nicht als scharfe Waffe verwendet werden kann, da der Querschlitz eine wirksame Übertragung der Energie auf ein auf die Mündung aufgesetztes Geschoss unterbindet. Der Querschlitz verringert auch die Verletzungsgefahr selbst für den Fall eines unsachgemäßen Gebrauches, der unter dem Schlagwort "aufgesetzter Schuss" bekannt ist. Der Querschlitz ermöglichst diese Vorteile, ohne das Laufende zu verschließen, so dass eine Reinigung des Laufes in gewohnter Weise möglich ist.

Eine bevorzugte Ausführungsform der Erfindung ist dadurch gekennzeichnet, dass mit Abstand von der Mündung des Laufes in einer Ringnut ein Dichtungsring angeordnet ist, der die Effektivität des Hunde-Trainingsgerätes und die mit diesem erreichbare Reichweite für den Dummy erhöht, da eine wirkungsvolle Abdichtung des Sackloches gegenüber dem Lauf sicher gestellt ist.

Zweckmäßigerweise ist die Abschußvorrichtung durch eine Gaswaffe oder Schreckschußwaffe gebildet, an deren Waffenlauf der Lauf unlösbar angeschlossen oder integral mit diesem ausgebildet ist. Die Verwendung einer Gaswaffe oder einer Schreckschusswaffe ermöglicht den Rückgriff auf die zu deren Herstellung vorliegenden Kenntnisse und Fertigungstechniken und bietet zugleich den Vorteil, dass auch das Hunde-Trainingsgerät aufgrund dessen schon optisch gegebener Ähnlichkeit mit einer Waffe mit der gebotenen Vorsicht gehandhabt wird.

Im Sinne einer gesteigerten Sicherheit gegen Fehlfunktion oder Fehlbedienung ist vorgesehen, daß die Gaswaffe oder Schreckschußwaffe als Pistole gestaltet ist mit einem im Pistolengriff angeordneten Magazin und mit einem oberhalb des Magazins angeordneten, axial verschieblichen Schlitten, in dem eine Bohrung zur Aufnahme des Schlagbolzens ausgebildet ist, der bei gespanntem Hahn unter der Kraft einer Feder um einen Betrag aus der Bohrung in Richtung des Hahns vorsteht, der kleiner als der Abstand des Schlagbolzens von dem Stoßboden der aus dem Magazin in den Waffenlauf eingesetzten Kartusche ist. Mit dieser Gestaltung ist der Vorteil verbunden, daß bei einem Sturz der Pistole auch aus größeren Höhen von ca. 1,50 m zwar der Schlitten bei gespanntem Hahn in dessen Richtung beschleunigt und folglich der Schlagbolzen am Hahn zur Anlage kommen kann, daß aber dennoch die Kartusche nicht abgefeuert wird, da der Schlagbolzen durch den Hahn nicht soweit in den Schlitten hineingedrückt wird, daß er zur Anlage am Stoßboden der Kartusche gelangt, wobei dazu auch die Dämpfungswirkung der Feder beitragt. Für eine gezielte Abfeuerung der Kartusche ist lediglich darauf zu achten, daß der Hahn so stark beschleunigt wird, daß er die dämpfende Wirkung der Feder überwinden kann.

Im folgenden wird die Erfindung an einem der in der Zeichnung dargestellten Ausführungsbeispiel näher erläutert; es zeigen:

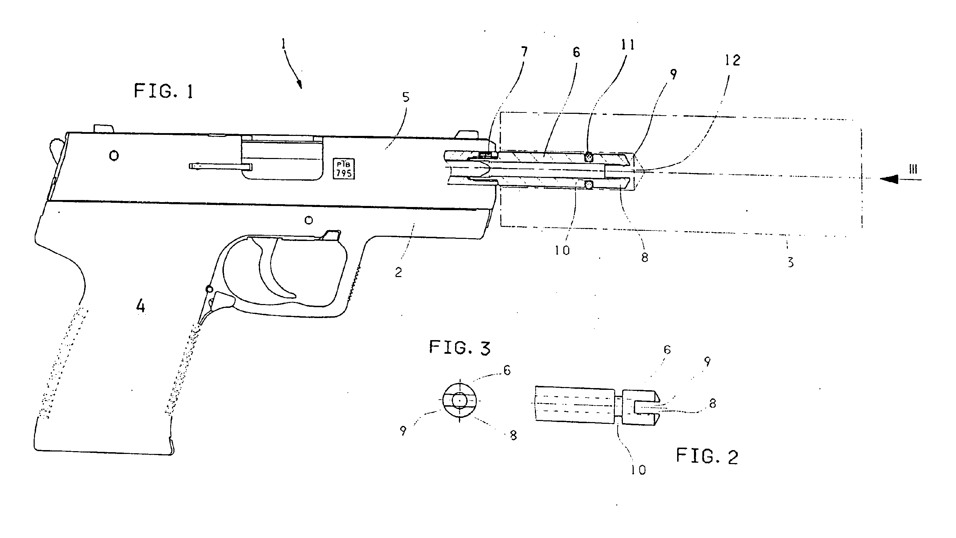

- Fig. 1: eine Seitenansicht eines Hunde-Trainingsgerätes, teilweise im Schnitt dargestellt,
- Fig. 2: eine isolierte Darstellung eines Teils des Laufes in einer Seitenansicht,
- Fig. 3: eine Sicht auf den Lauf aus Richtung des Pfeiles III aus Fig. 1, und
- Fig. 4: eine Teildarstellung einer Seitenansicht einer Pistole mit fliegendem Schlagbolzen, teilweise im Schnitt dargestellt.

In der Zeichnung dargestellt ist ein Hunde-Trainingsgerät 1, bei dem die Abschußvorrichtung 2 für einen Dummy 3 durch eine Gaswaffe oder Schreckschußwaffe 4 gebildet ist, an deren Waffenlauf 5 der Lauf 6 der Abschußvorrichtung 2 unlösbar angeschlossen ist, nämlich durch den Schweißpunkt 7.

An dem freien Ende des Laufes 6 ist an dessen Mündung 8 ein mit dieser verbundener Querschlitz 9 ausgebildet, wobei mit Abstand von der Mündung 8 des Laufes 6 in einer Ringnut 10 ein Dichtungsring 11 angeordnet ist. Der Dummy 3 ist mit einem Sackloch 12 versehen, so dass der Dummy 3 auf den Lauf 6 aufgesteckt werden kann, wobei das Sackloch 12 gegenüber dem Lauf 6 mittels des Dichtungsring 11 abgedichtet ist. Wird nun mit der in der Zeichnung dargestellten Schreckschußwaffe 4 ein Schuß abgegeben, entweichen die Treibgasse aus dem Lauf 6 durch den Querschlitz 9 und die Mündung 8 in das hintere Ende des Sackloches 12, so dass der Dummy 3 über eine große Entfernung von ggfs. mehr als 60 m weggeschossen werden kann. Da die Schreckschußwaffe 4 als Pistole gestaltet und mehrschüssig ist, können hintereinander 9 Dummys 3 verschossen werden.

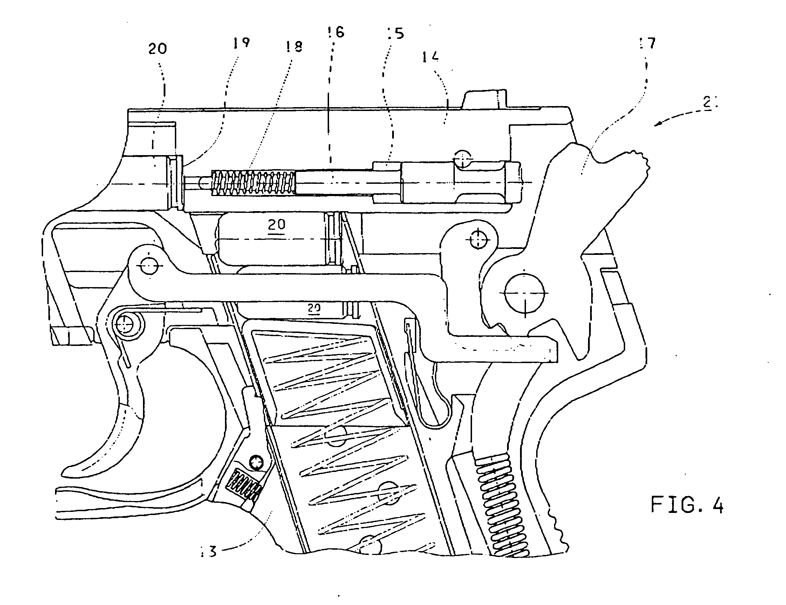

In Fig. 4 ist ein Sicherungsmechanismus dargestellt gegen das unbeabsichtigte Abfeuern einer Kartusche 20 beispielsweise bei einem Sturz. Dazu ist die Gaswaffe oder die Schreckschußwaffe 4 als Pistole 21 gestaltet mit einem im Pistolengriff 13 angeordneten Magazin und mit einem oberhalb des Magazins angeordneten, axial verschieblichen Schlitten 14, in dem eine Bohrung 15 zur Aufnahme des Schlagbolzens 16 ausgebildet ist, der bei gespanntem Hahn 17 unter der Kraft einer Feder 18 um einen Betrag aus der Bohrung 15 in Richtung des Hahns 17 vorsteht, der kleiner als der Abstand des Schlagbolzens 16 von dem Stoßboden 19 der aus dem Magazin in den Waffenlauf 5 eingesetzten Kartusche 20 ist.

## Patentansprüche

1. Hunde-Trainingsgerät mit einem unlösbar mit einer Abschußvorrichtung (2) verbundenen Lauf (6), auf den ein mit einem Sackloch (12) versehener Dummy (3) aufsteckbar ist, **dadurch gekennzeichnet, daß** an dem freien Ende des Laufes (6) an dessen Mündung (8) ein mit dieser verbundener Querschlitz (9) ausgebildet ist.

2. Hunde-Trainingsgerät nach Anspruch 1, **dadurch gekennzeichnet, daß** mit Abstand von der Mündung (8) des Laufes (6) in einer Ringnut (10) ein Dichtungsring (11) angeordnet ist.

3. Hunde-Trainingsgerät nach Anspruch 1 oder 2, **dadurch gekennzeichnet, daß** die Abschußvorrichtung (2) durch eine Gaswaffe oder eine Schreckschußwaffe (4) gebildet ist, an deren Waffenlauf (5) der Lauf (6) unlösbar angeschlossen oder integral mit diesem ausgebildet ist.

4. Hunde-Trainingsgerät nach einem der Ansprüche 1 bis 3, **dadurch gekennzeichnet, daß** die Gaswaffe oder die Schreckschußwaffe (4) als Pistole (21) gestaltet ist mit einem im Pistolengriff (13) angeordneten Magazin und mit einem oberhalb des Magazins angeordneten, axial verschieblichen Schlitten (14), in dem eine Bohrung (15) zur Aufnahme des Schlagbolzens (16) ausgebildet ist, der bei gespanntem Hahn (17) unter der Kraft einer Feder (18) um einen Betrag aus der Bohrung (15) in Richtung des Hahns (17) vorsteht, der kleiner als der Abstand des Schlagbolzens (16) von dem Stoßboden (19) der aus dem Magazin in den Waffenlauf (5) eingesetzten Kartusche (20) ist.
